# EUROPEAN PATENT SPECIFICATION

(11) **EP 3 956 203 B1**
(45) Date of publication and mention of the grant of the patent: **07.06.2023**
(21) Application number: 20720869.5
(22) Date of filing: 17.04.2020
(51) Int. Cl.: B62D 21/09, B62D 53/08

(54) **VEHICLE CHASSIS COMPRISING A LIFT CYLINDER SUPPORT, AND VEHICLE COMPRISING SUCH A CHASSIS**
FAHRZEUGCHASSIS MIT EINEM HUBZYLINDERTRÄGER UND FAHRZEUG MIT SOLCH EINEM CHASSIS
CHÂSSIS DE VÉHICULE COMPRENANT UN SUPPORT DE VÉRIN DE LEVAGE, ET VÉHICULE COMPRENANT UN TEL CHÂSSIS

(30) Priority: 17.04.2019 NL 2022966
(43) Date of publication of application: 23.02.2022
(73) Proprietor: Terberg Benschop B.V., 3405 XK Benschop (NL)
(72) Inventor: VAN ZOELEN, Ronald Cornelis Johannes, Nieuwegein (NL)
(74) Representative: Arnold & Siedsma
(86) International application number: PCT/NL2020/050256
(87) International publication number: WO 2020/214034

(56) References cited:
- GB-A- 1 180 228
- GB-A- 2 037 684
- GB-A- 2 372 490
- US-A- 2 482 868
- US-A- 2 815 980
- US-A- 2 847 230
- US-A1- 2004 124 600
- US-B1- 9 868 481

## Description

The present invention relates to a vehicle chassis, comprising:
- two essentially parallel runners that extend in a longitudinal direction;
- wherein a plane is defined by a bottom surface of the longitudinal direction of the parallel runners; and
- a lift cylinder support that is recessed relative to the plane defined by the runners.

The invention is further related to a vehicle comprising such a vehicle chassis and a lift cylinder that is supported by the lift cylinder support.

Applicant is manufacturer of a variety of special vehicles for industrial markets, such as RoRo tractors for ports, yard tractors used at distribution centers and/or container ports, tractors for transporting large industrial loads, e.g. in the steel industry.

Many of these special vehicles comprise a lifting mechanism, and the chassis of such a vehicle has to support this lifting mechanism in a secure and reliable way. This puts high demands on load transfer from the lifting mechanism and the load it carries to the chassis of the vehicle. Moreover, the chassis should provide enough space for accommodation of at least one and preferably two lift cylinders of the lifting mechanism.

In prior art vehicles, Applicant applied a lift cylinder support housing that was welded to a runner of the vehicle chassis. Due to the very high loads transferred from the lifting mechanism to the lift cylinder support housing, both the lift cylinder support housing itself, but also the runner of the vehicle chassis and the welded connection there between had to be oversized in terms of size and weight. A disadvantage of the prior art vehicles is that the welded connection between the chassis main beams and the lift cylinder support is located in an area where maximum strength is required due to the high forces to be transferred between the mentioned components. The runner was embodied as a profile having a rectangular cross section to provide enough material for the welding connection with an optionally attached bottom-plate underneath under the rectangular beam connected by welds and therefore critical for constant quality during the production process. Therefore the resulting prior art vehicle chassis was limited in maximum load capacity and sensitive for a reduced lifetime due to overloading or high peak loads.

US 2 482 868, which is considered the closest prior art, discloses a vehicle chassis according to the pre-amble of claim 1. At least the characterizing features of claim 1 are novel relative to this prior art document. A bracket is configured to support a lift cylinder. This bracket is secured to a frame member by bolts or the like, thereby joining the two originally separate parts of the bracket and the frame member. In order to be able to arrange bolts or the like, both the bracket and the frame member need to provide in itself enough space and strength to accommodate for example the through holes for the respective bolts. During use, the lift cylinder will push the bracket downward and backward relative to the frame member. This pushing force may be decompositioned into a downward directed force component and a backward directed force component. On the one hand, the downward directed force component may be absorbed by the angular shape of the brackets that are supported on the frame member. These brackets extend inward, i.e. in the width direction of the vehicle. Although rigidity may be obtained by this inward extension of the brackets, it does require the frame members to have a sufficient width, similar to the above described profile having a rectangular cross section applied in the prior art design of the Applicant and commonly used in prior art vehicles. This width reduces the available space between the runners. Due to the width that is necessary to support the angular bracket, the frame member will be oversized in terms of size and weight. On the other hand, the backward directed force component is directed rearward in the longitudinal direction of the frame member. This backward force component will load the bolts used for connecting the bracket and the frame member. Over time, the bolts are loaded and unloaded repeatedly, possibly leading to metal fatigue and failure.

United States patent applications US 2 815 980 A, US 2 847 230 A and US 2004/124600 A1, United States patent US 9 868 481 B1 and United Kingdom patent applications GB 2 372 490 A, GB 2 037 684 A and GB 1 180 228 A are acknowledged as further prior art.

There is an ongoing need to provide constant quality in chassis manufacturing and long life heavy duty chassis providing reliable and fail safe products.

An objective of the present invention is to provide a vehicle chassis, that is improved relative to the prior art and wherein at least one of the above stated problems is obviated.

Said objective is achieved with the vehicle chassis according to the present invention, comprising:
- two essentially parallel runners that extend in a longitudinal direction;
- wherein a plane is defined by a bottom surface of the longitudinal direction of the parallel runners;
- a lift cylinder support that is recessed relative to the plane defined by the runners;
- wherein the runners comprise an L-shaped cross section in the longitudinal direction thereof, said L-shape comprising a short leg that extends from one of the parallel runners inward toward the other of the parallel runners, and a long leg that forms a side piece of the runner;
- wherein the bottom surface of the runners is defined by the short legs; and
- wherein a side piece of the lift cylinder support is integrally formed by a part of the side piece of the runner that extends beyond the plane defined by the bottom surface of the longitudinal direction of the parallel runners to thereby form a continuous integral wall of both the runner and the lift cylinder support.

The continuous integral wall of the runner and the lift cylinder support forms a one part side piece of at least one of the runners and the recessed lift cylinder support between the runners. Due to the vehicle chassis comprising such a one part side piece of at least one of the runners and the recessed lift cylinder support between the runners, the side piece of the lift cylinder support forms an integral part with the runners without the need for a weld or bolt connection. Consequently, stress concentrations that are present in weld or bolt connections are absent in a one part side piece. Due to absence of such stress concentrations, the risk of metal fatigue reduces and the reliability and lifetime of the chassis increases.

Instead of a weld or bolt connection, at the position of the lift cylinder support, the wall of a profile of the runner extends downward beyond the plane defined by the longitudinal direction of the runners. This wall of the profile of the runner, which forms a side piece of the runner, thus also forms the side piece of the lift cylinder support. In other words, the side piece of the runner and the side piece of the lift cylinder support together form an integral side piece or wall. More in particular, a continuous integral wall of the runner and the lift cylinder support is formed by a part of the side piece of at least one of the runners extending beyond the plane define by the longitudinal direction of the parallel runners. In this way, any load carried by the lift cylinder support is optimally absorbed by the vehicle chassis. More in particular, the side piece of the lift cylinder support and the side piece of the runner will experience tensile forces in the plane of the side piece when a lift cylinder, that is arrangeable on the lift cylinder support, would lift a load. The side piece is variable in size, comprising only the long leg of the L-shaped cross section of the runners along a large part of the runner, but extending downward beyond the plane defined by the bottom surface of the longitudinal direction of the parallel runners where the vehicle chassis may be exposed to a high stress, especially due to the lift cylinder lifting a load. The side piece having a variable size allows it to be optimized to provide an optimal load transfer in the wall of the side pieces without stress concentrations. This load transfer follows a path from the lift cylinder support towards a set of rear axle supports. The cross-sectional shape of the runners varies along the longitudinal length thereof and may be optimized for each specific position along the length of the vehicle chassis. More in particular the height of the side piece is larger at positions where larger loads are expected. Due to the absence of any weld or bolt connection in the continuous and integral wall forming both the side piece of the runner and the side piece of the lift cylinder support, a high strength single plate with constant quality and limited tolerances on the outside dimensions is obtained.

In this way, a continuous and integral wall forming both the side piece of the runner and the side piece of the lift cylinder support results in a chassis with an increased lifetime and/or being able to handle heavier loads, while providing a reliable and fail safe product. Also the ratio between the maximum chassis load versus chassis weight is significantly improved relative to the prior art welded construction. A lighter vehicle consumes less energy during use.

It is remarked that the runners comprise an L-shaped cross section in the longitudinal direction thereof along most of the length thereof. However, at the position of the recessed lift cylinder support, the short leg may be considered absent, whereas the long leg is extended to form the continuous wall defining both the side piece of the runner and the side piece of the lift cylinder support. This leads to having sufficient space for the hydraulic lifting cylinders without compromising chassis strength.

The invention is further related to a vehicle, comprising a vehicle chassis according to the invention, and a lift cylinder that is supported by the lift cylinder support.

Preferred embodiments are the subject of the dependent claims.

The various aspects and features described and shown in the specification can be applied, individually, wherever possible. These individual aspects, and in particular the aspects and features described in the attached dependent claims, may be made subject of divisional patent applications.

In the following description preferred embodiments of the present invention are further elucidated with reference to the drawing, in which:
Figure 1 is a side view of a vehicle comprising a lift cylinder;
Figure 2 is a perspective view of a vehicle chassis suitable for a vehicle according to Figure 1;
Figure 3A is a cross section of the vehicle chassis of Figure 2;
Figure 3B is a cross section of a vehicle chassis according to the prior art; and
Figure 4 is a cross sectional side view of the vehicle chassis of Figure 2.

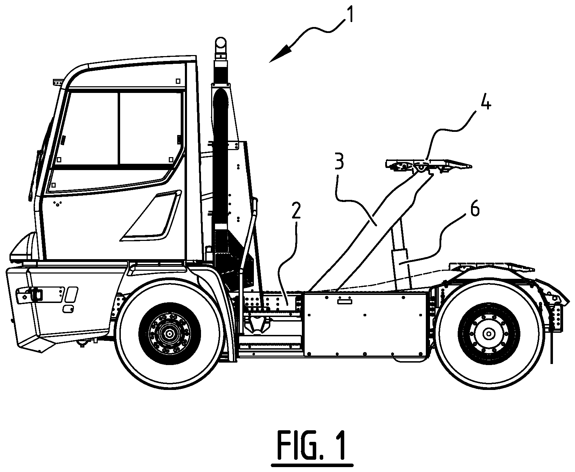

Figure 1 shows a vehicle 1, more in particular a Terminal tractor, having a vehicle chassis 2 that supports a lifting frame 3 having a connector 4 at an end thereof. The lifting frame 3 is hingedly connected to the chassis 2 at a pivot, of which only a lower bearing housing part 5 is shown in the Figures. The vehicle 1 further comprises a lift cylinder 6 that is arranged between the chassis 2 and the lifting frame 3. Said lift cylinder 6 is configured to extend and retract in order to lift and lower the lifting frame 2 relative to the chassis 2. The lift cylinder 6 is thus supported by the vehicle chassis 2 and more in particular by a lift cylinder support 7 thereof.

The vehicle chassis 2 comprises two essentially parallel runners 8 that extend in a longitudinal direction. An imaginary plane P is defined by the longitudinal direction of the parallel runners 8, and more in particular by the underside of said parallel runners. Short legs 15 of the L-shaped runners 8 thus extend in said imaginary plane P. The lift cylinder support 7 is recessed relative to the plane P defined by the runners 8, thereby providing enough space for the lift cylinder 6 to retract and lower the lifting frame 3 towards the chassis 2.

The vehicle chassis 2 further comprises a one part side piece 9 being a continuous and integral wall of at least one of the runners 8 and the recessed lift cylinder support 7 between the runners 8. The side piece 9-7 of the lift cylinder support 7 thus forms an integral continuous wall with the side piece 9-8 of the runners 8. Consequently, side pieces 9-7 and 9-8 form sub parts of the one part side piece 9. At the position of the lift cylinder support 7, the wall of a profile of the runner 8 extends beyond the plane P defined by the longitudinal direction of the runners 8.

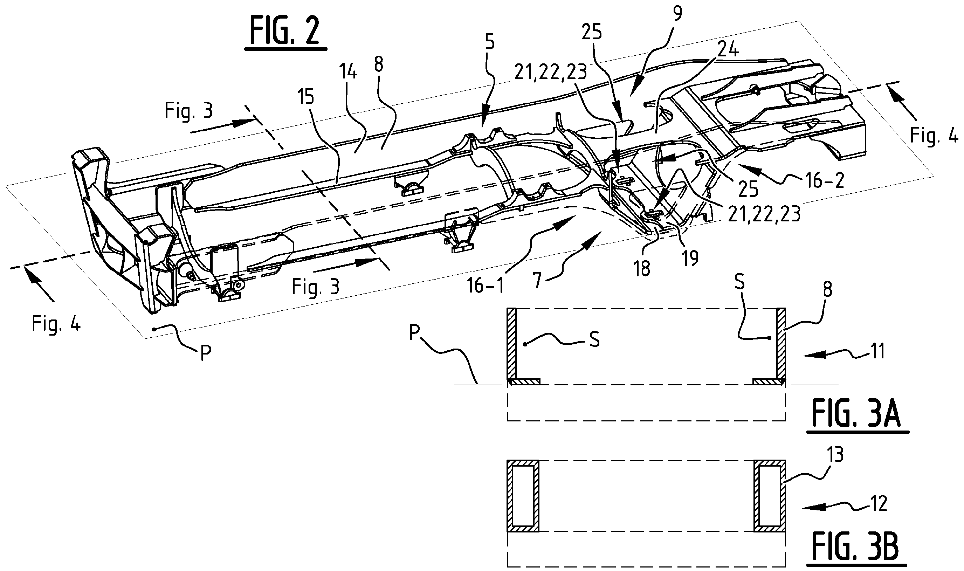

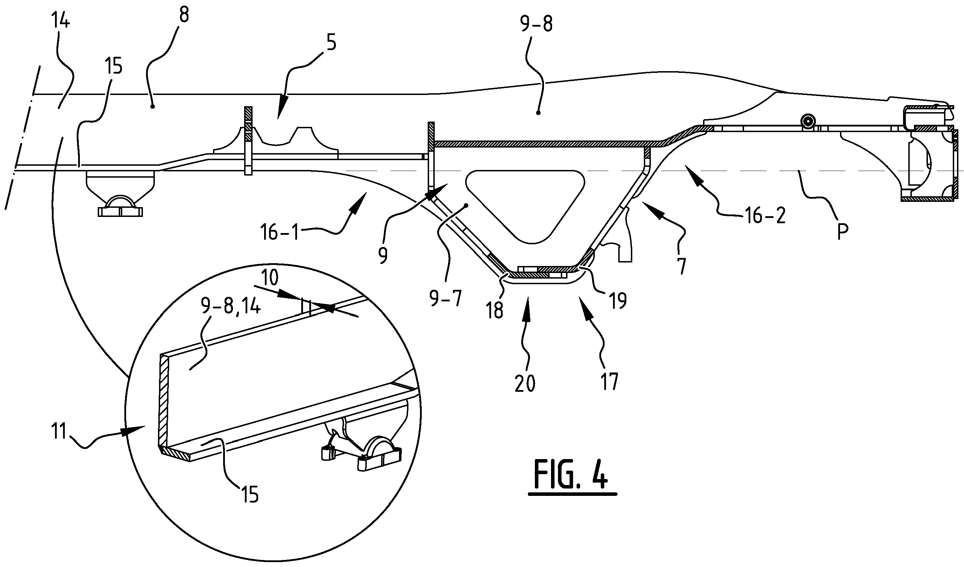

There is no need for weld or bolt connections between the runners 8 and the lift cylinder support 7, and an optimized strength and durability of the chassis 2 may be obtained if welds or bolts that would cause stress concentrations are replaced by an integral wall of the one part side piece 9. Moreover, an L-shaped cross section 11 of the runners 8 may be applied (Figure 3A and 4), because there is no need for excessive material in view of welding operations and an L-shaped profile already provides enough strength. Compared to a rectangular cross sectional profile 12 of runners 13 according to the prior art (Figure 3B), a significant increase of lifetime or higher loads can be applied to the chassis. The vehicle chassis 2 further comprising a one part side piece 9 of at least one of the runners 8 and the recessed lift cylinder support 7 between the runners 8 thus results in the option to use runners 8 with an L-shaped cross section 11, thereby contributing to a weight reduction of the chassis 2 compared to a prior art chassis having rectangular profiles as shown in Figure 3B. Likewise, also the runners of chassis of US 2 482 868 require a width to support the upper flanges of the angular attachment brackets.

The runners 8 comprise an L-shaped cross section 11 in the longitudinal direction thereof, wherein the L-shape 11 comprises a long leg 14 that forms the one part side piece 9-8 of the runner 8. The L-shape 11 further comprises a short leg 15 that extends from the runner 8 inward toward the other of the two runners 8. If the short leg 15 of the L-shape 11 is arranged at the same side where the lift cylinder support 7 is recessed relative to the plane P defined by the runners 8, additional space S is obtained between the runners 8. This extra space S, which is indicated in Figure 3A, increases flexibility and provides valuable space for components of the vehicle 1, such as the engine, transmission and battery packs thereof, that are to be mounted in the space between the runners 8.

The vehicle chassis 2 preferably comprises at least one transition 16-1, 16-2 wherein the distance, at which the continuous integral wall of the runner 8 and the lift cylinder support 7 extend beyond the plane P defined by the bottom surface of the longitudinal direction of the parallel runners 8, increases. In this transition 16-1, 16-2, the one part side piece 9 of at least one of the runners 8 and the lift cylinder support 7 transitions into a side piece 9-8 of only the respective one of the runners 8. This transition 16-1, 16-2 is preferably gradual and/or of a progressive nature to avoid material stress concentrations possibly leading to a reduced lifetime of the chassis 2. The at least one transition 16 comprises a curvature having a radius in the range of 100-1000 mm.

In the embodiment shown in Figures 2 and 4, the vehicle chassis 2 comprises a forward transition 16-1 that is arranged on a front side of the lift cylinder support 7, and a rearward transition 16-2 is arranged on a rear side of the lift cylinder support 7.

The forward transition 16-1 comprises a curvature having a radius in the range of 500-1000 mm.

The rearward transition 16-2 comprises a curvature having a radius in the range of 100-500 mm.

In the preferred embodiment shown in Figure 4, the one part side piece 9 of the lift cylinder support 7 defines substantially a V-shape 17 extending from the runner 8.

The lift cylinder support 7 comprises two plates 18, 19 that extend in a transverse direction between the opposite side pieces 9-7 of said lift cylinder support 7. The two plates 18, 19 define an overlap 20, which is preferably positioned at a side of the lift cylinder support 7 that is directed away from the plane P defined by the runners 8. In this way, the two plates 18, 19 define at the overlap 20 a strong base for supporting the lift cylinder 6. The overlap 20 furthermore provides the opportunity to compensate for any dimensional deviation to meet the required tolerances.

The two plates 18, 19 each comprise a slotted recess 21, 22, wherein the respective slotted recess 21, 22 of both plates 18, 19 are at least partially aligned to define a through hole 23 for a (not shown) end of the lift cylinder 6 and a (not shown) bolt connection. Such a bolt connection may be used to fix a head of the lift cylinder 6 to the lift cylinder support 7, possibly via a ball joint.

Said lift cylinder support 7 further comprises a reinforcement plate 24 that extends in the longitudinal direction and substantially parallel to the plane P defined by the runners 8. Said reinforcement plate 24 comprises at least one lift cylinder passage 25. In Figure 2, a total of two lift cylinder passages 25 are shown.

In Figure 4, the short legs 15 of the L-shaped cross section 11 of the runners 8 are stepped. Based on the short legs 15 alone, a plane could potentially be defined at different levels. In view of the present invention, it is remarked that the plane P defined by the bottom surface of the longitudinal direction of the parallel runners 8 is interpreted to be defined by the lowermost short legs 15 extending in said longitudinal direction of the runners 8. The bottom surface is thus defined by the lowermost short legs 15, resulting in the plane P as indicated in Figure 4.

The above described embodiment is intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims. The scope of the invention is defined solely by the following claims.

## Claims

1. Vehicle chassis, comprising:
- two essentially parallel runners (8) that extend in a longitudinal direction and that are configured to extend over rear wheels of a vehicle (1) and to support said rear wheels;
- wherein a plane (P) is defined by a bottom surface of the longitudinal direction of the parallel runners (8); and
- a lift cylinder support (7) that is recessed relative to the plane (P) defined by the runners (8),
**characterized in that**
- the runners (8) comprise an L-shaped cross section in the longitudinal direction thereof, said L-shape comprising a short leg (15) that extends from one of the parallel runners (8) inward toward the other of the parallel runners (8), and a long leg (14) that forms a side piece (9-8) of the runner (8);
- wherein the bottom surface of the runners is defined by the short legs (15); and
- wherein a side piece (9-7) of the lift cylinder support (7) is integrally formed by a part of the side piece (9-8) of the runner (8) that extends beyond the plane (P) defined by the bottom surface of the longitudinal direction of the parallel runners (8) to thereby form a one part side piece (9) defined by a continuous integral wall of both the runner (8) and the lift cylinder support (7).

2. Vehicle chassis according to claim 1, wherein:
- the lift cylinder support (7) comprises two plates (18, 19) that extend in a transverse direction between the opposite side pieces (9-7) of said lift cylinder support (7); and
- the two plates (18, 19) define an overlap (20).

3. Vehicle chassis according to claim 2, wherein the two plates (18, 19) each comprise a slotted recess (21, 22), wherein the respective slotted recess (21, 22) of both plates (18, 19) are at least partially aligned to define a through hole (23) for a bolt connection.

4. Vehicle chassis according to at least one of the foregoing claims, comprising at least one transition (16, 16-1, 16-2) wherein the distance, at which the continuous integral wall of the runner (8) and the lift cylinder support (7) extend beyond the plane (P) defined by the bottom surface of the longitudinal direction of the parallel runners (8), increases.

5. Vehicle chassis according to claim 4, wherein the at least one transition (16, 16-1, 16-2) comprises a curvature having a radius in the range of 100-1000 mm.

6. Vehicle chassis according to claim 4 or 5, wherein a forward transition (16-1) is arranged on a front side of the lift cylinder support (7).

7. Vehicle chassis according to any of claims 4-6, wherein a rearward transition (16-2) is arranged on a rear side of the lift cylinder support (7).

8. Vehicle chassis according to claim 6 or 7, wherein the forward transition (16-1) comprises a curvature having a radius in the range of 500-1000 mm.

9. Vehicle chassis according to claim 7 or 8, wherein the rearward transition (16-2) comprises a curvature having a radius in the range of 100-500 mm.

10. Vehicle chassis according to any of the foregoing claims, wherein the one part side piece (9-7) of the lift cylinder support (7) defines a V-shape extending from the runner (8).

11. Vehicle chassis according to at least one of the foregoing claims, wherein the short 1eg (15) of the L-shape is arranged at the same side where the lift cylinder support (7) is recessed relative to the plane (P) defined by the runners (8).

12. Vehicle chassis according to at least one of the foregoing claims, wherein said lift cylinder support (7) comprises a reinforcement plate (24) that extends in the longitudinal direction and substantially parallel to the plane (P) defined by the runners (8).

13. Vehicle chassis according to claim 12, wherein said reinforcement plate (24) comprises at least one lift cylinder passage (25).

14. Vehicle, comprising:
- a vehicle chassis (2) according to any of claims 1-13; and
- a lift cylinder (6) that is supported by the lift cylinder support (7).

## Patentansprüche

1. Fahrzeugchassis, aufweisend:
- zwei im Wesentlichen parallele Träger (8), die sich in einer Längsrichtung erstrecken und die so ausgebildet sind, dass sie sich über die Hinterräder eines Fahrzeugs (1) erstrecken und die Hinterräder tragen;
- wobei durch eine Bodenfläche in Längsrichtung der parallelen Träger (8) eine Ebene (P) definiert ist; und
- einen Hubzylinderträger (7), der relativ zu der durch die Träger (8) definierten Ebene (P) abgesetzt ist,
**dadurch gekennzeichnet, dass**
- die Träger (8) in ihrer Längsrichtung einen L-förmigen Querschnitt aufweisen, wobei die L-Form einen kurzen Schenkel (15) aufweist, der sich von einer der parallelen Träger (8) in Richtung der anderen der parallelen Träger (8) nach innen erstreckt, sowie einen langen Schenkel (14), der ein Seitenteil (9-8) des Trägers (8) bildet,
- wobei die Bodenfläche der Träger durch die kurzen Schenkel (15) definiert ist; und
- wobei ein Seitenteil (9-7) des Hubzylinderträgers (7) einstückig durch einen sich über die durch die Bodenfläche der Längsrichtung der parallelen Träger (8) definierte Ebene (P) hinaus erstreckenden Teil des Seitenteils (9-8) des Trägers (8) gebildet ist, um so ein einteiliges Seitenteil (9) zu bilden, das durch eine durchgehende integrale Wand sowohl des Trägers (8) als auch des Hubzylinderträgers (7) definiert ist.

2. Fahrzeugchassis nach Anspruch 1, wobei:
- der Hubzylinderträger (7) zwei Platten (18, 19) aufweist, die sich in einer Querrichtung zwischen den gegenüberliegenden Seitenteilen (9-7) des Hubzylinderträgers (7) erstrecken; und
- die beiden Platten (18, 19) eine gegenseitige Überlappung (20) aufweisen.

3. Fahrzeugchassis nach Anspruch 2, wobei die beiden Platten (18, 19) jeweils eine Langloch-Aussparung (21, 22) aufweisen, wobei die jeweilige Langloch-Aussparung (21, 22) beider Platten (18, 19) zumindest teilweise ausgerichtet sind, um ein Durchgangsloch (23) für eine Bolzenverbindung zu definieren.

4. Fahrzeugchassis nach zumindest einem der vorherigen Ansprüche, mit mindestens einem Übergang (16, 16-1, 16-2), bei dem der Abstand, in dem sich die durchgehende einstückige Wand des Trägers (8) und der Hubzylinderträger (7) über die durch die Bodenfläche der Längsrichtung der parallelen Träger (8) definierte Ebene (P) hinaus erstrecken, zunimmt.

5. Fahrzeugchassis nach Anspruch 4, wobei der mindestens eine Übergang (16, 16-1, 16-2) eine Krümmung aufweist mit einem Radius im Bereich von 100 bis 1000 mm.

6. Fahrzeugchassis nach Anspruch 4 oder 5, wobei an einer Vorderseite des Hubzylinderträgers (7) ein vorderer Übergang (16-1) angeordnet ist.

7. Fahrzeugchassis nach einem der Ansprüche 4 bis 6, wobei an einer Rückseite des Hubzylinderträgers (7) ein rückwärtiger Übergang (16-2) angeordnet ist.

8. Fahrzeugchassis nach Anspruch 6 oder 7, wobei der vordere Übergang (16-1) eine Krümmung aufweist mit einem Radius im Bereich von 500 bis 1000 mm.

9. Fahrzeugchassis nach Anspruch 7 oder 8, wobei der rückwärtige Übergang (16-2) eine Krümmung aufweist mit einem Radius im Bereich von 100 bis 500 mm.

10. Fahrzeugchassis nach einem der vorherigen Ansprüche, wobei das einstückige Seitenteil (9-7) des Hubzylinderträgers (7) eine von dem Träger (8) ausgehende V-Form bildet.

11. Fahrzeugchassis nach zumindest einem der vorherigen Ansprüche, wobei der kurze Schenkel (15) der L-Form auf der gleichen Seite angeordnet ist, auf der der Hubzylinderträger (7) gegenüber der durch die Träger (8) definierten Ebene (P) abgesetzt ist.

12. Fahrzeugchassis nach zumindest einem der vorherigen Ansprüche, wobei der Hubzylinderträger (7) eine Verstärkungsplatte (24) aufweist, die sich in Längsrichtung und im Wesentlichen parallel zu der durch die Träger (8) definierten Ebene (P) erstreckt.

13. Fahrzeugchassis nach Anspruch 12, wobei die Verstärkungsplatte (24) mindestens einen Hubzylinderdurchgang (25) aufweist.

14. Fahrzeug, aufweisend:
- ein Fahrzeugchassis (2) nach einem der Ansprüche 1 bis 13; und
- einen Hubzylinder (6), der von dem Hubzylinderträger (7) getragen wird.

## Revendications

1. Châssis de véhicule, comprenant :
- deux patins (8) sensiblement parallèles qui s'étendent dans une direction longitudinale et qui sont configurés pour s'étendre au-dessus de roues arrière d'un véhicule (1) et pour supporter lesdites roues arrière ;
- dans lequel un plan (P) est défini par une surface inférieure de la direction longitudinale des patins (8) parallèles ; et
- un support de vérin de levage (7) qui est évidé par rapport au plan (P) défini par les patins (8),
**caractérisé en ce que**
- les patins (8) comprennent une coupe transversale en forme de L dans la direction longitudinale de ceux-ci, ladite forme de L comprenant une branche courte (15) qui s'étend depuis l'un des patins (8) parallèles vers l'intérieur vers l'autre des patins (8) parallèles, et une branche longue (14) qui forme une pièce latérale (9-8) du patin (8) ;
- dans lequel la surface inférieure des patins est définie par les branches courtes (15) ; et
- dans lequel une pièce latérale (9-7) du support de vérin de levage (7) est formée d'un seul tenant par une partie de la pièce latérale (9-8) du patin (8) qui s'étend au-delà du plan (P) défini par la surface inférieure de la direction longitudinale des patins (8) parallèles pour former de ce fait une pièce latérale (9) d'un seul tenant définie par une paroi intégrale continue à la fois du patin (8) et du support de vérin de levage (7).

2. Châssis de véhicule selon la revendication 1, dans lequel :
- le support de vérin de levage (7) comprend deux plaques (18, 19) qui s'étendent dans une direction transversale entre les pièces latérales (9-7) opposées dudit support de vérin de levage (7) ; et
- les deux plaques (18, 19) définissent un chevauchement (20).

3. Châssis de véhicule selon la revendication 2, dans lequel les deux plaques (18, 19) comprennent chacune un évidement en forme de fente (21, 22), dans lequel les évidements en forme de fente (21, 22) respectifs des deux plaques (18, 19) sont au moins partiellement alignés pour définir un trou traversant (23) pour une liaison par boulon.

4. Châssis de véhicule selon au moins l'une des revendications précédentes, comprenant au moins une transition (16, 16-1, 16-2) dans laquelle la distance, à laquelle la paroi intégrale continue du patin (8) et le support de vérin de levage (7) s'étendent au-delà du plan (P) défini par la surface inférieure de la direction longitudinale des patins (8) parallèles, augmente.

5. Châssis de véhicule selon la revendication 4, dans lequel l'au moins une transition (16, 16-1, 16-2) comprend une courbure ayant un rayon dans la plage de 100 à 1 000 mm.

6. Châssis de véhicule selon la revendication 4 ou 5, dans lequel une transition vers l'avant (16-1) est agencée sur un côté avant du support de vérin de levage (7).

7. Châssis de véhicule selon l'une quelconque des revendications 4 à 6, dans lequel une transition vers l'arrière (16-2) est agencée sur un côté arrière du support de vérin de levage (7).

8. Châssis de véhicule selon la revendication 6 ou 7, dans lequel la transition vers l'avant (16-1) comprend une courbure ayant un rayon dans la plage de 500 à 1 000 mm.

9. Châssis de véhicule selon la revendication 7 ou 8, dans lequel la transition vers l'arrière (16-2) comprend une courbure ayant un rayon dans la plage de 100 à 500 mm.

10. Châssis de véhicule selon l'une quelconque des revendications précédentes, dans lequel la pièce latérale d'un seul tenant (9-7) du support de vérin de levage (7) définit une forme de V s'étendant depuis le patin (8).

11. Châssis de véhicule selon au moins l'une des revendications précédentes, dans lequel la branche courte (15) de la forme de L est agencée sur le même côté que celui où le support de vérin de levage (7) est évidé par rapport au plan (P) défini par les patins (8).

12. Châssis de véhicule selon au moins l'une des revendications précédentes, dans lequel ledit support de vérin de levage (7) comprend une plaque de renforcement (24) qui s'étend dans la direction longitudinale et sensiblement parallèle au plan (P) défini par les patins (8).

13. Châssis de véhicule selon la revendication 12, dans lequel ladite plaque de renforcement (24) comprend au moins un passage de vérin de levage (25).

14. Véhicule, comprenant :
- un châssis de véhicule (2) selon l'une quelconque des revendications 1 à 13 ; et
- un vérin de levage (6) qui est supporté par le support de vérin de levage (7).
